# EUROPÄISCHE PATENTSCHRIFT

(11) **EP 2 143 746 B1**
(45) Veröffentlichungstag und Bekanntmachung des Hinweises auf die Patenterteilung: **27.02.2013**
(21) Anmeldenummer: 09008604.2
(22) Anmeldetag: 01.07.2009
(51) Int. Cl.: C09D 175/12, C08G 18/66, C09D 175/08, C14C 11/00, D06M 15/564, C08G 18/12, C08G 18/48, C08G 18/10, C08G 18/76

(54) **Polyurethanharnstoff-Lösungen**
Polyurethane urea solutions
Solutions d'urée de polyuréthane

(30) Priorität: 11.07.2008 DE 102008032779
(43) Veröffentlichungstag der Anmeldung: 13.01.2010
(73) Patentinhaber: Bayer MaterialScience AG, 51368 Leverkusen (DE)
(72) Erfinder: Köcher, Jürgen, 40764 Langenfeld (DE); Rische, Thorsten, 59423 Unna (DE); Urban, Juergen, 51465 Bergisch Gladbach (DE); Casselmann, Holger, 51519 Odenthal (DE); Feller, Thomas, 42659 Solingen (DE)

(56) Entgegenhaltungen:
- EP-A- 1 041 097
- DE-A1- 3 401 753
- DE-A1- 4 132 747
- GB-A- 1 201 962

## Beschreibung

Die Erfindung betrifft neue Lösungen von Polyurethanharnstoffen mit verbesserter Löslichkeit in toxikologisch unbedenklichen organischen Lösungsmitteln, ein Verfahren zur Beschichtung von Substraten unter Verwendung dieser Lösungen von Polyurethanharnstoffen sowie die solcherart beschichteten Substrate.

Bei den erfindungsgemäß beschichteten Substraten handelt es sich vorzugsweise um Textilprodukte oder Leder, aber auch Werkstoffe wie Holz oder Beton können erfindungsgemäß beschichtet werden.

Die Beschichtung von Substraten, beispielsweise textilen Flächengebilden, mit Polyurethansystemen gehört zum Stand der Technik. Man unterscheidet hierbei wässrige Polyurethandispersionen und lösungsmittelhaltige Systeme. Beide Beschichtungssysteme zeichnen sich durch eine hohe Elastizität bei gleichzeitig guter Beständigkeit aus.

Einkomponenten-Polyurethanharnstoff-Beschichtungen auf Basis organischer Lösungsmittel sind bei Anwendern aufgrund ihrer Härte, Elastizität und Beständigkeit sehr geschätzt und werden beispielsweise für die Herstellung von Haftstrichen auf textilen Substraten eingesetzt. Unter einem Haftstrich versteht man bei einer mehrlagigen Beschichtung diejenige Schicht, die direkt auf das textile Substrat aufgetragen wird und die als Haftvermittler für weitere Beschichtungen dient. Haftstriche aus wässrigen Polyurethandispersionen sind auf textilen Substraten häufig nicht ausreichend stabil, so dass zur Herstellung von Haftstrichen Polyurethanharnstoffe in organischer Lösung bevorzugt verwendet werden.

Bei diesen Einkomponenten-Polyurethanharnstoffen in organischer Lösung ist der Filmbildungsprozess ein physikalischer Vorgang, der im Gegensatz zu den Zweikomponenten-Polyurethanen von keiner chemischen Reaktion begleitet ist.

Haftstrichsysteme mit besonders beständigen und elastischen Beschichtungen bestehen aus einer Mischung aus Urethanweichsegmenten mit einem langkettigen linearen Diol sowie Urethanhartsegmenten mit einem kurzkettigen Diol sowie Harnstoffhartsegmenten. Solche Systeme in organischer Lösung werden hergestellt, indem man ein Diisocyanat mit einem linearen Makrodiol (Polyether-, Polyester- oder Polycarbonatdiol) zu einem Prepolymer umsetzt und danach durch Umsetzung mit einem kurzkettigen Diol sowie mit einem aliphatischen Diamin als Kettenverlängerer auf das erforderliche Molgewicht einstellt (DE-A 199 14 879 und EP-A 1 041 097). Die zur Herstellung der Urethanbindung verwendeten Diisocyanate sind aromatische Diisocyanate wie isomere Diphenylmethandiisocyanate, beispielsweise 4,4'-Diphenylmethandiisocyanat (MDI), oder Isomerengemische von 2,4- und 2,6-Toluylendiisocyanat (TDI). Ein gut geeignetes Haftstrichsystem findet sich in der EP-A 1 041 097 im Beispiel 1, welches ein MDI-basiertes Polyurethanharnstoffpolymer in einem DMFhaltigen Lösungsmittelgemisch beschreibt.

Die Hartsegmente mit ihrer ausgeprägten Tendenz zu starken Wasserstoffbrückenbindungen bewirken die hohe Beständigkeit und Elastizität der auf das Textilgut aufgetragenen und getrockneten Beschichtung. Gleichzeitig neigen diese Beschichtungslösungen jedoch aufgrund dieser Wasserstoffbrückenbindungen zu Assoziationen und Kristallisationen aus der organischen Lösung. Aufgrund dieser Assoziat- und Kristallisationsneigung ist schon die Synthese dieser Polyurethanharnstoffe nur in sehr hochpolaren Lösungsmitteln wie beispielsweise Dimethylformamid (DMF), Dimethylacetamid oder N-Methylpyrrolidon (NMP) in Anteilen von 20-60 %, bezogen auf das Gesamtlösungsmittel, möglich (DE-A 2 252 280, DE-A 2 457 387 und Eur. Polym. J. 28 (6), 1992 (637-642).

Versucht man die Synthese der Polyurethanharnstofflösung des Beispiels 1 aus der EP-A 1 041 097 ohne DMF, NMP oder Dimethylacetamid als wesentliche Komponente des verwendeten Lösungsmittelgemisches, ist es nicht möglich, ein Polymer mit ausreichend hohem Molgewicht und ausreichend hoher Viskosität herzustellen. Die schlechte Löslichkeit der sich bildenden Polymere in einem Lösungsmittelgemisch mit geringer Polarität verhindert die Weiterreaktion zu ausreichend hochmolekularen Produkten, da sich schon niedermolekulare Produkte aus der Lösung abscheiden. Daher enthalten bisher alle bekannten 1K-Polyurethanharnstofflösungen, die für die Erzeugung von Haftstrichen auf textilen Geweben benutzt werden, sehr hohe Mengen polarer, aber toxikologisch bedenklicher Lösungsmittel wie beispielsweise Dimethylformamid (DMF). In Zukunft sollen Lösungsmittel wie DMF für die Herstellung und Verwendung von Haftstrichen auf Basis von Polyurethanharnstoffen möglichst vermieden werden.

Aus der DE-A 3 401 753 (entsprechend EP-A 0 154768) sind Lösungen von Polyurethanharnstoffen bekannt geworden, wobei die bei der Herstellung der Polyurethanharnstoffe aufgrund der Reaktionsführung übrig bleibenden Isocyanat-Gruppen mit Diaminen abgestoppt werden, welche unterschiedlich reaktive Aminogruppen aufweisen, so dass es nicht zu einem abschließenden Molekulargewichtsaufbau kommt. Allerdings bedürfen diese Zubereitungen (d.h. die Lösungen der so funktionalisierten Polyurethanharnstoffe) aufgrund der durch diese Maßnahme eingeführten reaktiven Aminogruppen der Verwendung eines Vernetzers.

Man kann lösliche Polyurethanharnstoffpolymere in einem weniger polaren Lösungsmittelsystem synthetisieren, wenn man die Anzahl der Hartsegmente, bestehend aus kurzkettigen Urethanen sowie Harnstoffgruppen, im Vergleich zu den langkettigen Weichsegmenten reduziert. Hierbei kommt es jedoch zu einer Reduktion der Elastizität und der Beständigkeit sowie einer Erniedrigung des Erweichungspunktes der aus dem 1K-System hergestellten Beschichtung.

Um einkomponentige Polyurethanharnstofflösungen für Haftstriche für textile Substrate mit dem bekannt guten Eigenschaftsniveau weiter nutzen zu können, bedarf es daher der Entwicklung neuer Polyurethansysteme, die auch in toxikologisch unbedenklichen Lösungsmittelsystemen sowohl herstellbar, löslich als auch verarbeitbar sind und zudem eine gute Elastizität, eine hohe Beständigkeit und einen ausreichend hohen Erweichungspunkt besitzen.

Die neuen Produkte müssen sich einmal in weniger polaren, gesundheitlich unbedenklichen Lösungsmittelgemischen herstellen lassen. Darüber hinaus müssen diese Formulierungen bzw. Lösungen stabil sein, was vor allem bedeutet, dass die gelösten Polymere nicht ausfallen bzw. auskristallisieren dürfen, die Lösungen also eine hohe Lagerbeständigkeit aufweisen. Ebenfalls notwendig ist eine niedrige und ausreichend stabile Viskosität für eine gute Verarbeitbarkeit der Beschichtungslösung. Die Erhöhung der Viskosität bis hin zur Bildung von Gelen, wie sie für solche Polyurethanharnstoffe bekannt ist (D. Joel, W. Hettrich und R. Becker, Polymer 1993, 34(12), 2623-2627), soll daher in den neuen Produkten ebenfalls verhindert werden.

Gegenstand der vorliegenden Erfindung ist die Bereitstellung neuer stabiler Polyurethanharnstoff-Beschichtungslösungen in toxikologisch unbedenklichen Lösungsmitteln, die nicht nur zur Herstellung von Haftstrichen auf textilen Geweben geeignet sind, sondern die weiterhin hinsichtlich Produkteigenschaften und Stabilität der Polymerlösung den gegenwärtig genutzten Systemen, z.B. solchen in DMF, ebenbürtig sind.

Diese Aufgabe wurde mit Hilfe von Polyurethanhamstoff-Lösungen, bestehend aus linearen bzw. wenig verzweigten Polyurethanharnstoffen, gelöst, wobei die Polyurethanharnstofflösung aufgebaut ist aus
a) einer Mischung aus zwei difunktionellen Polyetherdiolen mit jeweils einem Molgewicht zwischen 500 und 5000, wobei das molare Mischungsverhältnis beider Komponenten zwischen 10:90 und 90:10 zu währen ist,
b) pro Mol Polyetherdiol 0,7-1,5 Mol einer Mischung von zwei niedermolekularen difunktionellen Alkoholen des Molekulargewichtes 32 bis 500 als sogenannte Kettenverlängerer, wobei das molare Mischungsverhältnis beider Komponenten zwischen 10:90 und 90:10 zu wählen ist,
c) pro Mol Polyetherdiol 0,08 - 0,33 Mol eines aliphatischen oder cycloaliphatischen difunktionellen Amins des Molekulargewichtes 28 bis 500, als sogenannter Kettenverlängerer,
d) pro Mol Polyetherdiol 1,8 - 2,9 Mol eines aromatischen Diisocyanates,
   und Auflösung der erhaltenen Polyurethanharnstoffe oder Herstellung derselben in
e) 40-85 Gew.-% eines Lösungsmittelgemisches, bestehend aus linearen oder cyclischen Estern und Ketonen ist,
wobei verbleibendende NCO-Gruppen mit monofunktionellen Abrechern wie aliphatischen Alkoholen, aliphatischen Amine, 3-Aminopropyltrialkoxysiline, Butanonoxim oder Morpholin umgesetzt werden können.
Bevorzugt werden erfindungsgemäß Polyurethanharnstoffe eingesetzt, die aufgebaut werden aus
a) einer Mischung aus zwei difunktionellen Polyetherdiolen mit Molgewichten zwischen 500 und 5000, wobei das molare Mischungsverhältniss beider Komponenten zwischen 30:70 und 70:30 zu wählen ist,
b) pro Mol Polyetherdiol 0,8 - 1,4 Mol einer Mischung zweier difunktioneller Alkohole des Molekulargewichtes 32 bis 500 als sogenannte Keitenverlängerer, wobei das molare Mischungsverhältnis beider Komponenten zwischen 30:70 und 70:30 zu wählen ist,
c) pro Mol Polyetherdiol 0.1-0,30 Mol eines aliphatischen oder cycloaliphatischen difunktionellen Amins des Molekulargewichtes 28 bis 500 als sogenannter Kettenverlängerer,
d) pro Mol Polyetherdiol 1,9 - 2,8 Mol Diphenylmethan-4,4'-diisocyanat (4,4'-MDI)
   und Auflösung der erhaltenen Polyurethanharnstoffe oder Herstellung derselben in
e) 50-75 Gew.-% eines Lösungsmittelgemisches, bestehend aus γ-Butyrolacton sowie Estern und Ketonen,
wobei verbleibendende NCO-Gruppen mit monofunktionellen Abrechern wie aliphatischen Alkoholen, aliphatischen Amine, 3-Aminopropyltrialkoxysilane, Butanonoxim oder Morpholin umgesetzt werden können.

Die in den erfindungsgemäßen Beschichtungsmittel für textile Gewebe enthaltenen Polyurethanharnstoffe sind hochmolekulare, aber praktisch unvernetzt, thermoplastische Polyurethanharnstoffe, die in Lösung oder Schmelze hergestellt werden. Sie sind u. a. dadurch charakterisiert, dass sie ohne Mitverwendung von Dimethylformamid, Dimethylacetamid, N-Methylpyrrolidon, oder anderen toxikologisch bedenklichen, hochpolaren Lösungsmitteln hergestellt und angewendet werden können. Im Vergleich zum Produkt des Beispiels 1 aus der EP-A 1 041 097 enthalten die erfmdungsgemäßen Produkte mehr Weich- als Hartsegmente und sind daher in weniger polaren Lösungsmittelgemischen löslich, besitzen aber trotzdem das für Haftstriche notwendige hohe Niveau an Beständigkeit, Elastizität und hohem Erweichungspunkt.

Die Bezeichnung "Polyurethanharnstofflösung" schließt auch Lösungen ein, die z.B. Trimerisat-, Ureidion-, Allophanat- und/oder Biuretstruktureinheiten in untergeordnetcn Mengen neben Urethan- und Harnstoffstruktureinheiten enthalten.

Als Aufbaukomponenten der Polyurethane, die den erfindungsgemäßen Beschichtungsmitteln zugrunde liegen, eignen sich eine große Anzahl von prinzipiell bekannten Polyurethanrohstoffen.

Grundsätzlich geeignet sind Polyetherdiole (a) ohne signifikante Anteile höherfunktioneller Diole. Die Gesamtfunktionalität soll im Bereich 1,95 - 2,05 liegen. Eine höhere Funktionalität der Polyetherdiole ist zu vermeiden, da die entstehenden Polyurethanlösungen durch die hohe Vernetzung eine sehr hohe Viskosität erhalten, was für die Verarbeitung als Beschichtungslösung nachteilig ist. Die hohe Vernetzung verhindert außerdem, dass die entstehenden Polyurethanlösungen über mehrere Monate stabil sind, so wie es der Markt erfordert.

Die in Frage kommenden, Hydroxylgruppen aufweisenden Polyetherdiole sind solche, die durch Polymerisation von cyclischen Ethern wie Ethylenoxid, Propylenoxid, Butylenoxid, Tetrahydrofuran, Styroloxid oder Epichlorhydrin mit sich selbst, z. B. in Gegenwart von BF₃ oder basischen Katalysatoren, oder durch Anlagerung dieser Ringverbindungen, gegebenenfalls im Gemisch oder nacheinander, an Startkomponenten mit reaktionsfähigen Wasserstoffatomen wie Alkoholen, z. B. Ethylenglykol, 1,2-Proplenglykol oder 1,3-Propylenglykol, Aminen oder Wasser hergestellt werden.

Neben den Polyetherdiolen a) werden weiterhin niedermolekulare difunktionelle Alkohole b) eingesetzt. Es können sowohl aliphatische als auch aromatische Diole verwendet werden, wobei die aliphatischen Diole bevorzugt werden. Als solche kurzkettige aliphatische Diole kommen beispielsweise in Frage: Ethylenglykol, 1,2-Propylenglykol, 1,3-Propylenglykol, Neopentylglykol, Diethylenglykol, Triethylenglykol, Diethanolamin, 2-Ethyl-1,3-hexandiol, N-Methyldiisopropanolamin, 1,2-Propandiol, 1,3-Propandiol, 1,3-Butandiol, 1,4-Butandiol oder 1,6-Hexandiol. Pro Mol des Polyetherdiols oder der Polyetherdiolmischung werden 0,6 - 1,6 Mol des kurzkettigen aliphatischen Diols oder der Mischung zweier kurzkettiger aliphatischer Diole b) eingesetzt, bevorzugt 0,7 - 1,5 Mol und ganz besonders bevorzugt 0,8 - 1,4 Mol. Bevorzugt ist eine Mischung aus 1,4-Butandiol und 1,6-Hexandiol im Molverhältnis 70:30 bis 30:70.

Zur Herstellung der erfindungsgemäßen Polyurethan-Beschichtungen werden weiterhin difunktionelle aliphatische oder cycloaliphatische Amine als Kettenverlängerer (c) eingesetzt. Die Amine können als Mischungen eingesetzt werden, bevorzugt ist die Verwendung eines einzelnen Diamins. Solche Kettenverlängerer sind Hydrazin oder aliphatische Diamine, z. B. Ethylendiamin, Propylendiamin, 1,6-Hexamethylendiamin oder andere aliphatische Diamine. Weiterhin kommen auch cycloaliphatische Diamine wie 1,4-Bis(aminomethyl)cyclohexan, 4,4'-Diamino-3,3'-dimethyldicyclohexylmethan und andere (C₁- C₄)-Di- und Tetraalkyldicyclohexylmethane, z. B. 4,4'-Diamino-3,5-diethyl-3',5'-diisopropyldicyclohexylmethan in Frage. Bevorzugt werden 1-Amino-3,3,5-trimethyl-5-aminomethylcyclohexan (Isophorondiamin) und 4,4'-Diaminodicyclohexylmethan eingesetzt.

Es werden pro Mol Makrodiolgemisch (a) 0,05-0,35 Mol an Kettenverlängerern (c) eingesetzt, bevorzugt 0,08 - 0,33 Mol, ganz besonders bevorzugt 0,10 - 0,30 Mol.

Als Diisocyanate (d) kommen alle dem Fachmann bekannten aromatische Isocyanate einer mittleren NCO-Funktionalität von 2,0 in Frage, die einzeln oder in beliebigen Mischungen untereinander eingesetzt werden können, wobei es unerheblich ist, ob diese nach Phosgen- oder phosgen-freien Verfahren hergestellt wurden. Als aromatische Isocyanate d) kommen beispielsweise in Frage: 1,3- und 1,4-Phenyldiisocyanat, 2,4- und 2,6-Toluylendiisocyanat sowie beliebige Gemische dieser Isomeren, Diphenylmethan-2,4'-diisocyanat, Diphenylmethan-4,4'-diisocyanat sowie Gemische dieser beiden Isomeren und Naphthylen-1,5-diisocyanat. Besonders geeignet ist das Diphenylmethan-4,4'-diisocyanat. Es werden pro Mol Makrodiolgemisch (a) 1,7 - 3,0 Mol an Diisocyanatkomponente (d) eingesetzt, bevorzugt 1,8 - 2,9 Mol, ganz besonders bevorzugt 1,9 - 2,8 Mol.

Üblicherweise verwendet man etwa äquivalente Mengen an aliphatischem Diamin-Kettenverlängerer c), bezogen auf verbleibendes Isocyanat d), unter Abzug des mit dem Makrodiolgemisch und mit den niedermolekularen difunktionellen Alkoholen umgesetzten Isocyanatanteils. Vorzugsweise wird jedoch weniger als die äquivalente Menge, bis herab zu etwa 30-80 % der NCO-Gruppen, eingesetzt. Die verbleibenden NCO-Gruppen können mit monofunktionellen Abrechern wie aliphatischen Alkoholen, aliphatischen Amine, 3-Aminopropyltrialkoxysilane, Butanonoxim oder Morpholin umgesetzt werden. Dies verhindert ein zu großes Anwachsen des Molekulargewichtes beziehungsweise von Vernetzungs- und Verzweigungsreaktionen. Vorzugsweise werden aliphatische Monoalkohole wie Ethanol, n-Propanol, iso-Propanol, n-Butanol, iso-Butanol, n-Hexanol, n-Octanol sowie isomere Octanole wie das 2-Ethylhexanol eingesetzt.

Zur Herstellung der erfindungsgemäßen Polyurethanharnstoff-Beschichtungen werden das Polyetherdiol oder die Polyetherdiolmischung, sowie Diisocyanat in der Schmelze oder in Lösung miteinander umgesetzt, bis alle Hydroxylgruppen verbraucht sind. Hierzu wird ein Katalysator zur Beschleunigung der Urethanbildung zugegeben. Solche Katalysatoren sind entweder Lewis-Säuren oder Lewis-Basen und sind vielfach in der Literatur beschrieben, z. B. in L. Thiele und R. Becker, Adv. Urethane Sci. Technol. 1993, 12, 59-85. Die erfindungsgemäßen Polyurethanharnstoffe können mit beliebigen Katalysatoren hergestellt werden, Beispiele solcher Katalysatoren sind Verbindungen des Zinns, Zirkoniums, Zinks, Aluminiums, Titans oder des Wismuts. In einem zweiten Schritt werden danach die niedermolekularen Alkohole in Lösung zugegeben und mit den verbliebenen Isocyanatgruppen des Reaktionsgemisches umgesetzt. Es wird weiteres Lösungsmittel zugesetzt und das Kettenverlängerungsdiamin in reiner Form oder in organischer Lösung zugesetzt. Nach Erreichen der Zielviskosität werden die noch verbleibenden Reste an NCO durch einen monofunktionellen aliphatischen Alkohol, durch ein aliphatisches Amin, 3-Aminopropyltrialkoxysilane oder Butanonoxim blockiert.

Als Lösungsmittel e) für die Herstellung und die Anwendung der erfindungsgemäßen Polyurethanhamstoff-Beschichtungen kommen lineare und cyclische Ester und Ketone und deren Mischungen in Betracht. Die Menge des Lösungsmittels oder des Lösungsmittelgemisches, bezogen auf das Gesamtgewicht der Polyurethanharnstofflösung, beträgt 40-85%. Bevorzugt enthalten die Lösungsmittelmischungen γ-Butyrolacton als Hauptkomponente neben linearen Estern oder Ketonen. Bezogen auf das Gesamtgewicht der Polyurethanlösung, liegt der Anteil der Lösungsmittel zwischen 10 Gew.-% und 80 Gew.-%. Besonders bevorzugt liegt der Anteil der Lösungsmittel, bezogen auf die gesamte Polyurethanharnstofflösung, bei 50-75 %, wobei der Anteil an γ-Butyrolacton, bezogen auf die gesamte Polyurethanharnstofflösung, zwischen 15 Gew.-% und 75 Gew.-% liegt. Darüber hinaus können die Lösungsmittelmischungen noch Carbonsäureester wie beispielsweise Ethylacetat, Butylacetat oder 1-Methoxy-2-propylacetat, sowie Ketone wie Aceton, Methylethylketon und Methylisobutylketon enthalten.

Die erfindungsgemäßen Polyurethanharnstoffe besitzen Schmelzpunkte oberhalb 100 °C, vorzugsweise von 120 °C bis 160 °C. Sie besitzen eine hohe Haftung und Oberflächenhärte, hohe Reißdehnung und Reißfestigkeit.

Sie können in beliebigen, auf die jeweilige Anwendung bzw. die Art des zu beschichtenden Substrats eingestellten Konzentrationen angewendet werden, vorzugsweise verwendet man 15-60 Gew.-%ige Lösungen, besonders bevorzugt 25 bis 50 Gew.-%ige Lösungen.

Die erfindungsgemäßen Polyurethanharnstofflösungen werden bevorzugt zur Beschichtung von textilen Geweben und Leder verwendet. Der Auftrag kann direkt durch Drucken, Spritzen, Rakeln oder über eine Transferbeschichtung erfolgen. Von besonderer Bedeutung sind die erfindungsgemäßen Polyurethanharnstofflösungen zur Herstellung von Beschichtungsartikeln auf textilen Unterlagen nach dem Transferverfahren. Dabei werden die erfindungsgemäßen Polyurethanharnstofflösungen als Deckstriche eingesetzt, die auf dem Trägergewebe eine Auflage von 5 bis 60 g/m² erzeugen.

Übliche Zusatzstoffe und Hilfsmittel wie Griffhilfsmittel, Pigmente, Farbstoffe, Mattierungsmittel, UV-Stabilisatoren, phenolische Antioxidantien, Lichstabilisatoren, Hydrophobierungsmittel und/oder Verlaufshilfsmittel können mitverwendet werden.

Die mit den erfindungsgemäßen Polyurethanharnstofflösungen erhaltenen Zurichtungen haben sehr hohe Echtheitseigenschaften. Besonders vorteilhaft sind die hohe Haftung, Härte und Reißfestigkeit.

Die Vorteile der erfindungsgemäßen Polyurethanharnstoff-Lösungen werden durch Vergleichsversuche in den folgenden Beispielen dargelegt.

### Beispiele

Die dynamischen Viskositäten der Polyisocyanatlösungen wurden bei 23°C mit dem Viskosimeter VT 550, Platte-Kegel Messanordnung PK 100, der Fa. Haake (Karlsruhe, Deutschland) bestimmt. Durch Messungen bei unterschiedlichen Schergeschwindigkeiten wurde sichergestellt, dass das Fließverhalten der eingesetzten Polyisocyanatmischungen wie auch das der Vergleichsprodukte dem idealer Newtonscher Flüssigkeiten entspricht. Die Angabe der Schergeschwindigkeit kann deshalb entfallen.

Die Ermittlung des NCO-Gehaltes der in den Beispielen und Vergleichsbeispielen beschriebenen Harze erfolgte durch Titration gemäß DIN 53 185. Die in den Beispielen angegebenen NCO-Werte beziehen sich immer auf die Einwaage der betrachteten Synthesestufe des Reaktionsgemisches und nicht auf die Gesamtlösung.

Die in % angegebenen Mengenangaben verstehen sich, wenn nicht anders vermerkt, als Gew.-% und beziehen sich auf die erhaltene Gesamtlösung.

Die Hydrolysetests der aus den Polyurethanlösungen erhaltenen Filme wurden nach der DIN EN 12280-3 durchgeführt.

### Beispiel 1:

Dieses Beispiel beschreibt die Herstellung einer erfindungsgemäßen Polyurethanharnstoff-Lösung.

In einem 3-1-Rührgefäß mit Rühr-, Kühl- und Heizvorrichtung wurden 157,3 g eines difunktionellen Propylenoxidpolyethers mit einem mittleren Molekulargewicht von 1991 g/mol und 77,6 g eines difunktionellen Propylenoxidpolyethers mit einem mittleren Molekulargewicht von 983 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 150 mg Dibutylzinndilaurat . Es setzte eine exotherme Reaktion ein, wobei die Temperatur des Gemisches auf 78 °C anstieg. Es wurde 15 min weitergerührt, wobei man die Temperatur des Reaktionsgemisches auf 60 °C herunterfallen ließ. Der Isocyanatwert der Mischung wurde mit 3,1 % NCO bestimmt und lag etwas unterhalb des theoretischen Wertes.

Bei 60 °C wurden innerhalb von 10 min eine Lösung von 9,0 g 1,4-Butandiol und 5,9 g 1,6-Hexandiol in 75 g γ-Butyrolacton zugetropft. Die Temperatur stieg aufgrund der exothermen Reaktion auf 70 °C. Nach Beenden der Zugabe wurde noch 20 min nachgerührt, wobei die Temperatur langsam wieder auf 60 °C fiel. Der NCO-Gehalt der Reaktionsmischung wurde mit 0,54 % NCO bestimmt. Nach Beenden dieses Reaktionsschrittes wurden bei 60 °C 467 g γ-Butyrolacton und 218 g 1-Methoxy-2-propylacetat zugegeben. Man ließ die Temperatur dadurch auf 40 °C sinken. Bei einer Reaktionstemperatur von 35-40 °C wurde in Portionen eine Lösung von 3,3 g Isophorondiamin in 31,1 g Methylethylketon gelöst zugegeben. Man beobachtete eine stark zunehmende Viskosität der gebildeten Polyurethanharnstofflösung. Durch Zugabe von 0,5 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 26,5 %ige Polyurethanharnstofflösung mit einer Viskosität von 24000 mPas.

### Beispiel 2:

Dieses Beispiel beschreibt die Herstellung einer erfindungsgemäßen Polyurethanharnstoff-Lösung.

In einem 3-1-Rührgefäß mit Rühr-, Kühl- und Heizvorrichtung wurden 156,0 g eines difunktionellen Propylenoxidpolyethers mit einem mittleren Molekulargewicht von 1975 g/mol und 77,2 g eines difunktionellen Propylenoxidpolyethers mit einem mittleren Molekulargewicht von 978 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 150 mg BorchiKat 24 (Wismuthaltiger Katalysator der Firma Borchers, Langenfeld, Deutschland). Es setzte eine exotherme Reaktion ein, wobei die Temperatur des Gemisches auf 70 °C anstieg. Es wurde 13 min weitergerührt, wobei man die Temperatur des Reaktionsgemisches auf 60 °C herunterfallen ließ. Der Isocyanatwert der Mischung wurde mit 3,2 % NCO bestimmt und lag etwas unterhalb des theoretischen Wertes.

Bei 60 °C wurden innerhalb von 12 min eine Lösung von 9,0 g 1,4-Butandiol und 5,9 g 1,6-Hexandiol in 75 g γ-Butyrolacton zugetropft. Die Temperatur stieg aufgrund der exothermen Reaktion auf 64 °C. Nach Beenden der Zugabe wurde noch 20 min nachgerührt, wobei die Temperatur langsam wieder auf 60 °C fiel. Der NCO-Gehalt der Reaktionsmischung wurde mit 0,56 % NCO bestimmt. Nach Beenden dieses Reaktionsschrittes wurden bei 60 °C 467 g γ-Butyrolacton und 100 g 1-Methoxy-2-propylacetat zugegeben. Man ließ die Temperatur dadurch auf 40 °C sinken. Bei einer Reaktionstemperatur von 35-40 °C wurde in Portionen eine Lösung von 4,0 g Isophorondiamin in 31,6 g Methylethylketon gelöst zugegeben. Man beobachtete eine stark zunehmende Viskosität der bebildeten Polyurethanharnstofflösung. Durch Zugabe von 1,0 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 29,1 %ige Polyurethanharnstofflösung mit einer Viskosität von 54000 mPas.

### Beispiel 3:

Dieses Beispiel beschreibt die Herstellung einer erfindungsgemäßen Polyurethanharnstoff-Lösung.

In einem 3-1-Rührgefäß mit Rühr-, Kühl- und Heizvorrichtung wurden 156,0 g eines difunktionellen Propylenoxidpolyethers mit einem mittleren Molekulargewicht von 1975 g/mol und 77,6 g eines difunktionellen Propylenoxidpolyethers mit einem mittleren Molekulargewicht von 978 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 75 mg Dibutylzinndilaurat. Es setzte eine exotherme Reaktion ein, wobei die Temperatur des Gemisches auf 65 °C anstieg. Es wurde 16 min weitergerührt, wobei man die Temperatur des Reaktionsgemisches auf 60 °C herunterfallen ließ. Der Isocyanatwert der Mischung wurde mit 3,2 % NCO bestimmt und lag etwas unterhalb des theoretischen Wertes.

Bei 60 °C wurden innerhalb von 12 min eine Lösung von 9,0 g 1,4-Butandiol und 5,9 g 1,6-Hexandiol in 75 g γ-Butyrolacton zugetropft. Die Temperatur stieg aufgrund der exothermen Reaktion auf 64 °C. Nach Beenden der Zugabe wurde noch 26 min nachgerührt, wobei die Temperatur langsam wieder auf 60 °C fiel. Der NCO-Gehalt der Reaktionsmischung wurde mit 0,57 % NCO bestimmt. Nach Beenden dieses Reaktionsschrittes wurden bei 60 °C 467 g γ-Butyrolacton und 57,0 g 1-Methoxy-2-propylacetat zugegeben. Man ließ die Temperatur dadurch auf 40 °C sinken. Bei einer Reaktionstemperatur von 35-40 °C wurde in Portionen eine Lösung von 3,6 g Isophorondiamin in 25,8 g Methylethylketon gelöst zugegeben. Man beobachtete eine stark zunehmende Viskosität der gebildeten Polyurethanharnstofflösung. Durch Zugabe von 1,5 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 30,4 %ige Polyurethanharnstofflösung mit einer Viskosität von 50000 mPas.

### Beispiel 4:

Dieses Beispiel beschreibt die Herstellung einer erfindungsgemäßen Polyurethanharnstoff-Lösung.

In einem 3-1-Rührgefäß mit Rühr-, Kühl- und Heizvorrichtung wurden 137,4 g eines difunktionellen Propylenoxidpolyethers mit einem mittleren Molekulargewicht von 1991 g/mol und 67,8 g eines difunktionellen Propylenoxidpolyethers mit einem mittleren Molekulargewicht von 983 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 150 mg Dibutylzinndilaurat. Es setzte eine exotherme Reaktion ein, wobei die Temperatur des Gemisches auf 68 °C anstieg. Es wurde 17 min weitergerührt, wobei man die Temperatur des Reaktionsgemisches auf 60 °C herunterfallen ließ. Der Isocyanatwert der Mischung wurde mit 3,8 % NCO bestimmt und lag etwas unterhalb des theoretischen Wertes.

Bei 60 °C wurden innerhalb von 12 min eine Lösung von 10,2 g 1,4-Butandiol und 6,7 g 1,6-Hexandiol in 75 g γ-Butyrolacton zugetropft. Die Temperatur stieg aufgrund der exothermen Reaktion auf 65 °C. Nach Beenden der Zugabe wurde noch 31 min nachgerührt, wobei die Temperatur langsam wieder auf 60 °C fiel. Der NCO-Gehalt der Reaktionsmischung wurde mit 0,57 % NCO bestimmt. Nach Beenden dieses Reaktionsschrittes wurden bei 60 °C 467 g γ-Butyrolacton und 110 g 1-Methoxy-2-propylacetat zugegeben. Man ließ die Temperatur dadurch auf 40 °C sinken. Bei einer Reaktionstemperatur von 35-40 °C wurde in Portionen eine Lösung von 2,7 g Isophorondiamin in 27,8 g Methylethylketon gelöst zugegeben. Man beobachtete eine stark zunehmende Viskosität der gebildeten Polyurethanharnstofflösung. Durch Zugabe von 3,5 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 27,4 %ige Polyurethanharnstofflösung mit einer Viskosität von 34100 mPas.

### Beispiel 5:

Dieses Beispiel beschreibt die Herstellung einer erfindungsgemäßen Polyurethanharnstoff-Lösung.

In einem 3-1-Rührgefäß mit Rühr-, Kühl- und Heizvorrichtung wurden 136,3 g eines difunktionellen Propylenoxidpolyethers mit einem mittleren Molekulargewicht von 1975 g/mol und 67,5 g eines difunktionellen Propylenoxidpolyethers mit einem mittleren Molekulargewicht von 978 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 150 mg Dibutylzinndilaurat. Es setzte eine exotherme Reaktion ein, wobei die Temperatur des Gemisches auf 71 °C anstieg. Es wurde 11 min weitergerührt, wobei man die Temperatur des Reaktionsgemisches auf 60 °C herunterfallen ließ. Der Isocyanatwert der Mischung wurde mit 3,8 % NCO bestimmt und lag etwas unterhalb des theoretischen Wertes.

Bei 60 °C wurden innerhalb von 15 min eine Lösung von 9,0 g 1,4-Butandiol und 8,3 g 1,6-Hexandiol in 75 g γ-Butyrolacton zugetropft. Die Temperatur stieg aufgrund der exothermen Reaktion auf 69 °C. Nach Beenden der Zugabe wurde noch 29 min nachgerührt, wobei die Temperatur langsam wieder auf 60 °C fiel. Der NCO-Gehalt der Reaktionsmischung wurde mit 0,56 % NCO bestimmt. Nach Beenden dieses Reaktionsschrittes wurden bei 60 °C 467 g γ-Butyrolacton zugegeben. Man ließ die Temperatur dadurch auf 40 °C sinken. Bei einer Reaktionstemperatur von 35-40 °C wurde in Portionen eine Lösung von 3,6 g Isophorondiamin in 28,8 g Methylethylketon gelöst zugegeben. Man beobachtete eine stark zunehmende Viskosität der gebildeten Polyurethanharnstofflösung. Durch Zugabe von 4,5 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 30,4 %ige Polyurethanharnstofflösung mit einer Viskosität von 45800 mPas.

### Beispiel 6:

Dieses Beispiel beschreibt die Herstellung einer erfindungsgemäßen Polyurethanharnstoff- Lösung.

In einem 3-1-Rührgefäß mit Rühr-, Kühl- und Heizvorrichtung wurden 136,3 g eines difunktionellen Propylenoxidpolyethers mit einem mittleren Molekulargewicht von 1975 g/mol und 67,5 g eines difunktionellen Propylenoxidpolyethers mit einem mittleren Molekulargewicht von 978 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 150 mg Dibutylzinndilaurat. Es setzte eine exotherme Reaktion ein, wobei die Temperatur des Gemisches auf 70 °C anstieg. Es wurde 16 min weitergerührt, wobei man die Temperatur des Reaktionsgemisches auf 60 °C herunterfallen ließ. Der Isocyanatwert der Mischung wurde mit 3,9 % NCO bestimmt.

Bei 60 °C wurden innerhalb von 12 min eine Lösung von 7,7 g 1,4-Butandiol und 10,0 g 1,6-Hexandiol in 75 g γ-Butyrolacton zugetropft. Die Temperatur stieg aufgrund der exothermen Reaktion auf 70 °C. Nach Beenden der Zugabe wurde noch 23 min nachgerührt, wobei die Temperatur langsam wieder auf 60 °C fiel. Der NCO-Gehalt der Reaktionsmischung wurde mit 0,56 % NCO bestimmt. Nach Beenden dieses Reaktionsschrittes wurden bei 60 °C 467 g γ-Butyrolacton zugegeben. Man ließ die Temperatur dadurch auf 40 °C sinken. Bei einer Reaktionstemperatur von 35-40 °C wurde in Portionen eine Lösung von 5,2 g Isophorondiamin in 38,1 g Methylethylketon gelöst zugegeben. Man beobachtete eine stark zunehmende Viskosität der gebildeten Polyurethanharnstofflösung. Durch Zugabe von 3,5 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 30,2 %ige Polyurethanharnstofflösung mit einer Viskosität von 34800 mPas.

### Beispiel 7:

Dieses Beispiel beschreibt die Herstellung einer erfindungsgemäßen Polyurethanharnstoff-Lösung.

In einem 3-1-Rührgefäß mit Rühr-, Kühl- und Heizvorrichtung wurden 126,4 g eines difunktionellen Propylenoxidpolyethers mit einem mittleren Molekulargewicht von 1975 g/mol und 72,4 g eines difunktionellen Propylenoxidpolyethers mit einem mittleren Molekulargewicht von 978 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 150 mg Dibutylzinndilaurat. Es setzte eine exotherme Reaktion ein, wobei die Temperatur des Gemisches auf 71 °C anstieg. Es wurde 14 min weitergerührt, wobei man die Temperatur des Reaktionsgemisches auf 60 °C herunterfallen ließ. Der Isocyanatwert der Mischung wurde mit 3,9 % NCO bestimmt.

Bei 60 °C wurden innerhalb von 12 min eine Lösung von 7,7 g 1,4-Butandiol und 10,0 g 1,6-Hexandiol in 75 g γ-Butyrolacton zugetropft. Die Temperatur stieg aufgrund der exothermen Reaktion auf 63 °C. Nach Beenden der Zugabe wurde noch 26 min nachgerührt, wobei die Temperatur langsam wieder auf 60 °C fiel. Der NCO-Gehalt der Reaktionsmischung wurde mit 0,57 % NCO bestimmt. Nach Beenden dieses Reaktionsschrittes wurden bei 60 °C 456,9 g γ-Butyrolacton zugegeben. Man ließ die Temperatur dadurch auf 40 °C sinken. Bei einer Reaktionstemperatur von 35-40 °C wurde in Portionen eine Lösung von 4,0 g Isophorondiamin in 28,1 g Methylethylketon gelöst zugegeben. Man beobachtete eine stark zunehmende Viskosität der gebildeten Polyurethanharnstofflösung. Durch Zugabe von 5,0 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 30,4 %ige Polyurethanharnstofflösung mit einer Viskosität von 68000 mPas.

### Beispiel 8:

Dieses Beispiel beschreibt die Herstellung einer erfindungsgemäßen Polyurethanharnstoff-Lösung.

In einem 3-1-Rührgefäß mit Rühr-, Kühl- und Heizvorrichtung wurden 146,2 g eines difunktionellen Propylenoxidpolyethers mit einem mittleren Molekulargewicht von 1975 g/mol und 62,6 g eines difunktionellen Propylenoxidpolyethers mit einem mittleren Molekulargewicht von 978 g/mol eingewogen. Danach wurden 153,7 g γ -Butyrolacton zugegeben und die Mischung auf 50 °C erwärmt. Man gab zunächst 86,8 g Diphenylmethan-4,4'-diisocyanat (4,4'-MDI) zu, daraufhin noch 150 mg Dibutylzinndilaurat. Es setzte eine exotherme Reaktion ein, wobei die Temperatur des Gemisches auf 71 °C anstieg. Es wurde 9 min weitergerührt, wobei man die Temperatur des Reaktionsgemisches auf 60 °C herunterfallen ließ. Der Isocyanatwert der Mischung wurde mit 3,9 % NCO bestimmt.

Bei 60 °C wurden innerhalb von 12 min eine Lösung von 7,7 g 1,4-Butandiol und 10,0 g 1,6-Hexandiol in 75 g γ-Butyrolacton zugetropft. Die Temperatur stieg aufgrund der exothermen Reaktion auf 65 °C. Nach Beenden der Zugabe wurde noch 29 min nachgerührt, wobei die Temperatur langsam wieder auf 60 °C fiel. Der NCO-Gehalt der Reaktionsmischung wurde mit 0,56 % NCO bestimmt. Nach Beenden dieses Reaktionsschrittes wurden bei 60 °C 467 g γ-Butyrolacton zugegeben. Man ließ die Temperatur dadurch auf 40 °C sinken. Bei einer Reaktionstemperatur von 35-40 °C wurde in Portionen eine Lösung von 3,1 g Isophorondiamin in 24,4 g Methylethylketon gelöst zugegeben. Man beobachtete eine stark zunehmende Viskosität der gebildeten Polyurethanharnstofflösung. Durch Zugabe von 5,5 g 2-Ethylhexanol und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 30,9 %ige Polyurethanharnstofflösung mit einer Viskosität von 54600 mPas.

### Beispiel 9:

Dieses Beispiel beschreibt die Herstellung einer Haftstrichlösung des Standes der Technik in DMF-haltigem Lösungsmittelgemisch.

In einem 3-1-Rührgefäß mit Rühr-, Kühl- und Heizvorrichtung wurden 300,0 g eines difunktionellen Propylenoxidpolyethers mit einem mittleren Molekulargewicht von 2000 g/mol eingewogen. Danach wurden 105,0 g Dimethylformamid (DMF) zugegeben und die Mischung auf 60 °C erwärmt. Man gab 115,5 g Diphenylmethan-4,4'-diisocyanat (4,4'-MDI) zu und erwärmte innerhalb von 15 min auf 75 °C. Nach Erreichen der 75 °C wurde noch 40 min bei dieser Temperatur weitergerührt. Der Isocyanatwert der Mischung wurde mit 4,9 % bestimmt und lag knapp unter dem theoretisch erwarteten Wert.

Die Mischung wurde daraufhin auf 55 °C abgekühlt und bei dieser Temperatur innerhalb vonl3 min eine Lösung von 23,0 g 1,4-Butandiol in 201,3 g DMF zugetropft. Nach Ende des Zutropfens wurde innerhalb von 17 min auf 75 °C aufgeheizt und die Reaktionsmischung bei dieser Temperatur noch 45 min gerührt. Der Isocyanatwert wurde nach beendeter Reaktion bei einem Wert von 0,53 % bestimmt.

Nach Beenden dieses Reaktionsschrittes wurde der Ansatz auf 50 °C abgekühlt, dann wurden 232,5 g Methylethylketon und 231,0 g Toluol zugegeben. Man ließ die Temperatur dadurch auf 40 °C sinken. Bei einer Reaktionstemperatur von 35-40 °C wurde in Portionen eine Lösung von 3,5 g Isophorondiamin in 38,4 g Toluol gelöst zugegeben. Man beobachtete eine stark zunehmende Viskosität der gebildeten Polyurethanharnstofflösung. Durch Zugabe von 4,0 g 3-Aminopropyltriethoxysilan und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Man erhielt eine 35,6 %ige Polyurethanharnstofflösung mit einer Viskosität von 20800 mPas.

### Beispiel 10:

Dieses Beispiel beschreibt die Herstellung eines Haftstriches des Standes der Technik ohne Verwendung von DMF und Toluol.

In einem 3-1-Rührgefäß mit Rühr-, Kühl- und Heizvorrichtung wurden 300,0 g eines difunktionellen Propylenoxidpolyethers mit einem mittleren Molekulargewicht von 2000 g/mol eingewogen. Danach wurden 105,0 g γ-Butyrolacton zugegeben und die Mischung auf 60 °C erwärmt. Man gab 115,5 g Diphenylmethan-4,4'-diisocyanat (4,4'-MDI) zu und erwärmte innerhalb von 25 min auf 73 °C. Nach Erreichen der Reaktionstemperatur wurde mit Unterbrechung insgesamt 8,75 h bei dieser Temperatur weitergerührt. Der Isocyanatwert der Mischung wurde mit 5,1 % bestimmt.

Die Mischung wurde daraufhin auf 50 °C abgekühlt und bei dieser Temperatur wurde innerhalb von 20 min eine Lösung von 23,0 g 1,4-Butandiol in 201,3 g γ -Butyrolacton zugetropft. Man erwärmte auf 74 °C und rührte bei dieser Temperatur 1,25 h bei 74 °C und 45 min bei 90 °C nach. Der Isocyanatwert wird nach beendeter Reaktion bei einem Wert von 0,45 % bestimmt.

Nach Beenden dieses Reaktionsschrittes wurde der Ansatz auf 50 °C abgekühlt, dann wurden 232,5 g Methylethylketon und 231,0 g Butylacetat zugegeben. Man ließ die Temperatur dadurch auf 40 °C sinken. Bei einer Reaktionstemperatur von 35-40 °C wurde in Portionen eine Lösung von 3,7 g Isophorondiamin in 40,0 g Butylacetat gelöst zugegeben. Man beobachtete eine stark zunehmende Viskosität der gebildeten Polyurethanharnstofflösung. Durch Zugabe von 3,5 g 3-Aminopropyltriethoxysilan und 1 h Nachrühren bei 35 °C wurden die noch im Reaktionsgemisch befindlichen Isocyanatgruppen umgesetzt, so dass kein weiterer Molekulargewichtsaufbau mehr entstehen konnte.

Nach beendeter Reaktion und Abkühlen auf Raumtemperatur erhielt man ein stark getrübtes Produkt. Der Polyurethanharnstoff war in dem gewählten Lösungsmittelsystem ohne DMF nicht ausreichend löslich und konnte daher nicht als Haftstrichsystem verwendet werden.

### Beispiel 11: Verwendungsbeispiel

Zum Vergleich der Beschichtungseigenschaften wurde aus den Polyurethanlösungen gemäß Beispiel 1 bis 8 Vergleichsbeispiel 9 (Produkt gemäß dem Stand der Technik mit DMF und Toluol als Lösungsmittel) Beschichtungsfilme in einer Schichtdicke von 0,15 mm angefertigt und geprüft.

**Tabelle 1: Ergebnisse der Filmprüfungen**

| **Beispiel-Nr.** | **100 % Modul** | **Zugfestigkeit** | **Bruchdehnung** | **Erweichungspunkt** |
|---|---|---|---|---|
| | **(MPa)** | **(MPa)** | **(%)** | **(°C)** |
| 1 | 0,9 | 8,2 | 2930 | 140 |
| 2 | 0,8 | 2,9 | 2770 | 160 |
| 3 | 0,7 | 3,8 | 3000 | 165 |
| 4 | 1,3 | 16 | 1700 | 150 |
| 5 | 0,9 | 14,2 | 2440 | 120 |
| 6 | 0,9 | 14,6 | 2450 | 125 |
| 7 | 1,0 | 17,5 | 2070 | 120 |
| 8 | 0,9 | 13,7 | 2680 | 125 |
| 9 (Vergleichsbeispiel) | 1,8 | 17,2 | 1340 | 160 |

Diese Ergebnisse zeigen, das erfindungsgemäße Polyurethanlösungen die Herstellung von Beschichtungen ermöglichen, die unter Verwendung von toxikologisch unbedenklichen organischen Lösemitteln hergestellt werden. Mit unterschiedlichen Produkten ist es möglich, eine Vielzahl von physikalischen Eigenschaften der Filme einzustellen.

## Patentansprüche

1. Lösungen von Polyurethanharnstoffen erhältlich durch Umsetzung
a) einer Mischung aus difunktionellen Polyetherdiolen mit jeweils einem Molgewicht zwischen 500 und 5000, wobei das molare Mischungsverhältnis beider Komponenten zwischen 10:90 und 90:10 zu wählen ist,
b) pro Mol Polyetherdiol 0,7-1,5 Mol einer Mischung von zwei niedermolekularen difunktionellen Alkoholen des Molekulargewichtes 32 bis 500 als sogenannte Kettenverlängerer, wobei das Mischungsverhältnis beider Komponenten in Mol zwischen 10:90 und 90:10 zu wählen ist,
c) pro Mol Polyetherdiol 0,08-0,33 Mol eines aliphatischen oder cycloaliphatischen Diamins des Molekulargewichtes 28 bis 500 als sogenannter Kettenverlängerer,
d) pro Mol Polyetherdiol 1,8 - 2,9 Mol eines aromatischen Diisocyanates, und Auflösung der erhaltenen Polyurethanharnstoffe oder Herstellung derselben in
e) bezogen auf die Gesamtmischung (a) bis (c) 40-85 Gew.-% Lösungsmittel oder Lösungsmittelgemischen, bestehend aus linearen oder cyclischen Estern und Ketonen,
wobei verbleibende NCO-Gruppen mit monofunktionellen Abbrechern umgesetzt werden können.

2. Lösungen gemäß Anspruch 1 erhältlich durch Umsetzung
a) einer Mischung aus difunktionellen Polyetherdiolen mit Molgewichten zwischen 500 und 5000, wobei das Mischungsverhältnis beider Komponenten in Mol zwischen 30:70 und 70:30 zu wählen ist,
b) pro Mol Polyetherdiol 0,8-1,4 Mol zweier difunktioneller Alkohole des Molekulargewichtes 32 bis 500 als sogenannte Kettenverlängerer, wobei das Mischungsverhältnis beider Kompenenten in Mol zwischen 30:70 und 70:30 zu wählen ist,
c) pro Mol Polyetherdiol 0,10-0,30 Mol eines aliphatischen oder cycloaliphatischen Diamins des Molekulargewichtes 28 bis 500 als sogenannter Kettenverlängerer,
d) pro Mol Polyetherdiol 1,9 - 2,8 Mol Diphenylmethan-4,4'diisocyanat (4,4'-MDI),
und Auflösung der erhaltenen Polyurethanharnstoffe oder Herstellung derselben in
e) 50-75 Gew.-% eines Lösungsmittelgemischcs, bestehend aus γ-Butyrolacton sowie Estern und Ketonen,
wobei verbleibende NCO-Gruppen mit monofunktionellen Abbrechern umgesetzt werden können.

3. Verwendung von Lösungen gemäß Ansprüche 1 bis 2 zur Beschichtung von Substraten.

4. Verwendung gemäß Anspruch 3, **dadurch gekennzeichnet, dass** die Lösungen durch Drucken, Spritzen, Rakeln oder durch Transferbeschichtung auf die Substrate aufgebracht werden.

5. Verwendung gemäß Ansprüchen 3 und 4, **dadurch gekennzeichnet, dass** es sich bei den Substraten um Textilien handelt.

6. Verwendung gemäß Ansprüchen 3 und 4, **dadurch gekennzeichnet, dass** es sich bei den Substraten um Leder handelt.

7. Verwendung gemäß Ansprüchen 3 bis 6, **dadurch gekennzeichnet**, das die Polyurethanharnstofflösung als Haftstrich verwendet wird.

8. Substrate, beschichtet mit Lösungen gemäß Ansprüchen 1 bis 2.

9. Substrate, beschichtet mit Polyurethanhanstoff-Schichten erhalten aus Lösungen gemäß Ansprüchen 1 bis 2.

## Claims

1. Solutions of polyurethaneureas obtainable by reacting
a) a mixture of difunctional polyether diols having in each case a molecular weight between 500 and 5000, wherein the molar mixing ratio of the two components must be chosen between 10:90 and 90:10,
b) 0.7-1.5 mol, per mole of polyether diol, of a mixture of two low molecular weight difunctional alcohols of molecular weight 32 to 500 as so-called chain extenders, wherein the mixing ratio of the two components in mole must be chosen between 10:90 and 90:10,
c) 0.08-0.33 mol, per mole of polyether diol, of an aliphatic or cycloaliphatic diamine of molecular weight 28 to 500 as so-called chain extender,
d) 1.8-2.9 mol, per mole of polyether diol, of an aromatic diisocyanate,
and dissolving the resulting polyurethaneureas or producing same in
e) 40-85 weight %, based on the total mixture (a) to (c), of solvent or solvent mixtures consisting of linear or cyclic esters and ketones,
wherein remaining NCO groups can be reacted with monofunctional terminators.

2. Solutions according to Claim 1 obtainable by reacting
a) a mixture of difunctional polyether diols having molecular weights between 500 and 5000, wherein the mixing ratio of the two components in mole must be chosen between 30:70 and 70:30,
b) 0.8-1.4 mol, per mole of polyether diol, of two difunctional alcohols of molecular weight 32 to 500 as so-called chain extenders, wherein the mixing ratio of the two components in mole must be chosen between 30:70 and 70:30,
c) 0.10-0.30 mol, per mole of polyether diol, of an aliphatic or cycloaliphatic diamine of molecular weight 28 to 500 as so-called chain extender,
d) 1.9-2.8 mol, per mole of polyether diol, of diphenylmethane 4,4'-diisocyanate (4,4'-MDI),
and dissolving the resulting polyurethaneureas or producing same in
e) 50-75 weight % of a solvent mixture consisting of γ-butyrolactone and also esters and ketones,
wherein remaining NCO groups can be reacted with monofunctional terminators.

3. Use of solutions according to Claims 1 to 2 for coating of substrates.

4. Use according to Claim 3, **characterized in that** the solutions are applied to the substrates by printing, spraying, knife coating or transfer coating.

5. Use according to Claims 3 and 4, **characterized in that** the substrates comprise textiles.

6. Use according to Claims 3 and 4, **characterized in that** the substrates comprise leather.

7. Use according to Claims 3 to 6, **characterized in that** the polyurethaneurea solution is used as an adhesive coating.

8. Substrates coated with solutions according to Claims 1 to 2.

9. Substrates coated with polyurethaneurea layers obtained from solutions according to Claims 1 to 2.

## Revendications

1. Solutions de polyuréthane-urées pouvant être obtenues par mise en réaction de :
a) un mélange de polyéther-diols bifonctionnels ayant chacun un poids moléculaire compris entre 500 et 5 000, le rapport molaire de mélange entre les deux composants étant choisi entre 10:90 et 90:10,
b) par mol de polyéther-diol, 0,7 à 1,5 mole d'un mélange de deux alcools bifonctionnels inférieurs d'un poids moléculaire de 32 à 500 en tant qu'agents dits allongeurs de chaîne, le rapport de mélange entre les deux composants en moles étant choisi entre 10:90 et 90:10,
c) par mole de polyéther-diol, 0,08 à 0,33 mole d'une diamine aliphatique ou cycloaliphatique d'un poids moléculaire de 28 à 500 en tant qu'agent dit allongeur de chaîne,
d) par mole de polyéther-diol, 1,8 à 2,9 moles d'un diisocyanate aromatique,
et dissolution des polyuréthane-urées obtenues ou fabrication de celles-ci dans
e) par rapport à l'ensemble du mélange (a) à (c), 40 à 85 % en poids d'un solvant ou mélange de solvants, constitué par des esters et cétones linéaires ou cycliques,
les groupes NCO restants pouvant être mis en réaction avec des agents de terminaison monofonctionnels.

2. Solutions selon la revendication 1, pouvant être obtenues par mise en réaction de :
a) un mélange de polyéther-diols bifonctionnels ayant des poids moléculaires compris entre 500 et 5 000, le rapport de mélange entre les deux composants en moles étant choisi entre 30:70 et 70:30,
b) par mol de polyéther-diol, 0,8 à 1,4 mole de deux alcools bifonctionnels d'un poids moléculaire de 32 à 500 en tant qu'agents dits allongeurs de chaîne, le rapport de mélange entre les deux composants en moles étant choisi entre 30:70 et 70:30,
c) par mole de polyéther-diol, 0,10 à 0,30 mole d'une diamine aliphatique ou cycloaliphatique d'un poids moléculaire de 28 à 500 en tant qu'agent dit allongeur de chaîne,
d) par mole de polyéther-diol, 1,9 à 2,8 moles de 4,4'-diisocyanate de diphénylméthane (4,4'-MDI),
et dissolution des polyuréthane-urées obtenues ou fabrication de celles-ci dans
e) 50 à 75 % en poids d'un mélange de solvants, constitué par de la γ-butyrolactone, ainsi que des esters et des cétones,
les groupes NCO restants pouvant être mis en réaction avec des agents de terminaison monofonctionnels.

3. Utilisation de solutions selon les revendications 1 à 2 pour le revêtement de substrats.

4. Utilisation selon la revendication 3, **caractérisée en ce que** les solutions sont appliquées sur les substrats par impression, pulvérisation, raclage ou par revêtement par transfert.

5. Utilisation selon les revendications 3 et 4, **caractérisée en ce que** les substrats sont des textiles.

6. Utilisation selon les revendications 3 et 4, **caractérisée en ce que** les substrats sont du cuir.

7. Utilisation selon les revendications 3 à 6, **caractérisée en ce que** la solution de polyuréthane-urée est utilisée en tant que revêtement adhésif.

8. Substrats, revêtus avec des solutions selon les revendications 1 à 2.

9. Substrats, revêtus avec des couches de polyuréthane-urée obtenues à partir de solutions selon les revendications 1 à 2.
